# FASCICULE DE BREVET EUROPEEN

(11) **EP 1 151 887 B1**
(45) Date de publication et mention de la délivrance du brevet: **30.11.2005**
(21) Numéro de dépôt: 01401115.9
(22) Date de dépôt: 27.04.2001
(51) Int. Cl.: B60K 15/03, B60K 15/035, B60K 15/077, B60K 15/06

(54) **Réservoir à carburant et procédé de fabrication**
Kraftstofftank und Herstellungsverfahren
Fuel tank and manufacturing process

(30) Priorité: 03.05.2000 FR 0005638
(43) Date de publication de la demande: 07.11.2001
(73) Titulaire: Inergy Automotive Systems Research (Société Anonyme), 1120 Bruxelles (BE)
(72) Inventeur: Taurel, Jean-Luc, 54970 Landres (FR); Firtion, Eric, 60150 Villers sur Coudun (FR)
(74) Mandataire: Vande Gucht, Anne

(56) Documents cités:
- EP-A- 0 571 876
- EP-A- 0 799 990
- EP-A- 0 864 458
- EP-A- 0 930 189
- EP-A- 1 002 682
- WO-A-99/42316
- WO-A-99/42319
- US-A- 4 306 844
- US-A- 5 394 902
- PATENT ABSTRACTS OF JAPAN vol. 011, no. 064 (M-565), 26 février 1987 (1987-02-26) & JP 61 220929 A (NISSAN SHATAI CO LTD), 1 octobre 1986 (1986-10-01)

## Description

La présente invention concerne un réservoir à carburant, notamment pour véhicule automobile.

Il est connu de réaliser une enveloppe de réservoir à carburant par soufflage d'une paraison en matière thermoplastique.

Un tel procédé de fabrication présente l'avantage de permettre la réalisation d'une enveloppe de réservoir à carburant d'un seul tenant.

Néanmoins, ce procédé ne permet pas de réaliser aisément des reliefs, tels que des nervures ou des logements, sur la surface intérieure du réservoir.

Par ailleurs, l'accès à l'intérieur d'un tel réservoir est limité par la dimension des ouvertures qui sont réalisées à travers l'enveloppe.

Par conséquent, il est relativement difficile de positionner de manière optimale à l'intérieur du réservoir des accessoires tels que des éléments de l'ensemble d'aspiration par exemple.

On connaît par la demande EP-A-0 571 876 un réservoir à carburant comportant deux parties réunies à leur périphérie de part et d'autre d'un support sur lequel sont montés divers accessoires à placer à l'intérieur du réservoir

Le réservoir à carburant connu du document EP-A-0 930 189 comporte toutes les caractéristiques du préambule de la revendication 1.

L'utilisation d'un tel support permet d'éviter d'avoir à réaliser des ouvertures importantes à travers la paroi du réservoir mais rend plus complexe l'assemblage du réservoir.

Enfin, il existe un besoin pour réduire au maximum les émissions d'hydrocarbures à travers l'enveloppe du réservoir, pour des questions d'environnement et de réglementation.

L'invention vise notamment à réaliser un réservoir satisfaisant à la réglementation concernant les émissions d'hydrocarbures, dont l'assemblage est aisé tout en offrant de multiples possibilités dans le choix du positionnement d'accessoires à l'intérieur du réservoir.

Elle y parvient grâce à un nouveau réservoir à carburant, comportant une enveloppe formée par l'assemblage d'au moins deux parties de réservoir réalisées par moulage de matière plastique et définissant, lorsque assemblées, la surface intérieure du réservoir, ce réservoir étant caractérisé par le fait qu'il comporte une pompe à carburant fixée sur sa surface intérieure, avant l'assemblage des parties de réservoir.

Grâce à l'invention, il est aisé de réaliser des nervures ou logements sur la surface intérieure du réservoir en utilisant un moule de forme adaptée.

De plus, il est possible de positionner aisément la pompe à carburant et/ou différents éléments d'un système de remplissage en des emplacements choisis pour accroître les performances du réservoir.

La fixation d'éléments directement sur la surface intérieure du réservoir tend à simplifier sa fabrication, à diminuer le nombre de pièces, à en améliorer la fiabilité, à en abaisser le coût et à limiter les émissions d'hydrocarbures, en réduisant le nombre d'ouvertures ou de perçages à réaliser à travers l'enveloppe.

En particulier, l'enveloppe du réservoir peut être dépourvue d'orifice traversant destiné à l'introduction à l'intérieur du réservoir d'un élément rapporté, notamment être dépourvue d'orifice traversant de section supérieure à celle du corps de la pompe à carburant, situé à l'aplomb de la pompe à carburant par exemple.

Le réservoir peut comporter au moins un élément rapporté tel qu'une jauge, fixé sur la surface intérieure du réservoir et séparé de la pompe à carburant.

Dans une réalisation particulière, les deux parties de réservoir sont réalisées par moulage par injection de matière thermoplastique.

Toujours dans une réalisation particulière, au moins l'une des parties de réservoir comporte des moyens de fixation destinés à permettre le montage d'un élément rapporté à l'intérieur du réservoir, ces moyens de fixation étant réalisés d'un seul tenant avec ladite partie de réservoir.

On évite ainsi de réaliser des perçages dans l'enveloppe du réservoir pour mettre en place des moyens de fixation, de tels perçages étant source de problèmes d'étanchéité et contribuant à augmenter les émissions d'hydrocarbures.

Dans une réalisation particulière, les moyens de fixation précités comportent au moins une paroi formant saillie à l'intérieur du réservoir.

Dans une autre réalisation particulière, cette paroi comporte au moins un évidement permettant de recevoir un organe de fixation d'un élément rapporté.

Toujours dans une réalisation particulière, la paroi en question comporte au moins une dent destinée à s'encliqueter dans un évidement d'un élément rapporté.

Avantageusement, au moins l'une des parties de réservoir comporte un logement permettant la fixation sur le réservoir d'un élément par l'extérieur de celui-ci, ce logement étant défini par une paroi venue de moulage avec la partie de réservoir concernée.

Dans une réalisation particulière, cet élément est un filtre destiné à piéger les vapeurs de carburant, encore appelé canister.

La fixation du canister à l'extérieur du réservoir assure un accès aisé à cet élément, ce qui facilite son remplacement éventuel.

Elle permet également d'éviter l'emploi de canalisations extérieures entre le canister et le réservoir.

Selon l'invention, l'une des parties de réservoir comporte un compartiment placé dans un point bas du réservoir et ce dernier comporte une tubulure de remplissage dont l'extrémité par laquelle sort le carburant est positionnée de manière à ce que le carburant tombe lors du remplissage dans le compartiment précité.

La forme de ce dernier est choisie pour permettre de constituer, avec une faible quantité de carburant, une réserve de hauteur suffisante pour pouvoir amorcer la pompe à carburant située dans ce compartiment et dont l'entrée d'aspiration débouche dans le fond du compartiment en question.

On peut ainsi réaliser un réservoir qui permet de recommencer à rouler après une panne sèche sans qu'il soit nécessaire de verser une quantité importante de carburant dans celui-ci.

Avantageusement, le compartiment en question est réalisé d'un seul tenant par moulage de matière avec la partie de réservoir correspondante.

Selon l'invention, la pompe est supportée par des moyens de support permettant d'éviter la transmission des vibrations de la pompe au réservoir.

Ces moyens de support comportent une partie centrale agencée pour recevoir la pompe et des ailettes permettant d'assurer le maintien de cette partie centrale, agencées pour se fixer à la paroi définissant le compartiment précité.

La réalisation directe du compartiment précité avec la partie de réservoir correspondante et la fixation de la pompe dans ce compartiment permet de s'affranchir des problèmes de déformation du réservoir dus par exemple au fluage de la matière plastique sur une longue période, puisque le compartiment et la pompe peuvent suivre les déformations de la paroi du réservoir.

Dans les réservoirs antérieurs, dans lesquels la pompe est solidaire d'un ensemble d'aspiration fixé sur la paroi supérieure de l'enveloppe du réservoir, un système de compensation à ressort est prévu pour maintenir la pompe plaquée contre la paroi inférieure de l'enveloppe si celle-ci se déforme.

Grâce à l'invention, un tel système de compensation à ressort devient inutile.

Dans une réalisation préférée, l'une des parties de réservoir forme sensiblement la moitié inférieure et l'autre partie forme sensiblement la moitié supérieure.

Avantageusement, la partie inférieure comporte un logement défini par une paroi réalisée d'un seul tenant par moulage de matière, ce logement étant destiné à recevoir un filtre à carburant.

Toujours avantageusement, la partie supérieure comporte un logement défini par une paroi réalisée d'un seul tenant par moulage de matière, ce logement étant destiné à recevoir un canister.

Dans une réalisation particulière, la surface intérieure du réservoir comporte des nervures sensiblement verticales.

Ces nervures contribuent à améliorer la tenue mécanique du réservoir et tendent à limiter l'amplitude des remous du carburant lorsque le véhicule est en mouvement.

De préférence, au moins une nervure est traversée à sa base par un passage permettant la circulation du carburant à l'intérieur du réservoir, de façon à permettre un vidage complet du réservoir.

Le réservoir peut comporter une jauge à carburant fixée sur sa surface intérieure.

Le réservoir peut également comporter un régulateur de pression fixé sur sa surface intérieure, à proximité de son point bas.

Le carburant prélevé par la pompe et non envoyé au moteur peut alors être refoulé dans ce réservoir par un tel régulateur de pression.

Toujours dans une réalisation particulière, les deux parties de réservoir sont assemblées par soudure.

En variante, les parties de réservoir sont assemblées par collage.

L'invention a encore pour objet un réservoir à carburant comportant une enveloppe formée par l'assemblage d'au moins deux parties de réservoir réalisées par moulage de matière plastique et définissant, lorsque assemblées, la surface intérieure du réservoir, ce réservoir étant caractérisé par le fait qu'il comporte un compartiment placé dans un point bas du réservoir et par le fait que l'une des parties de réservoir comporte une tubulure de remplissage dont l'extrémité par laquelle sort le carburant est positionnée de manière à ce que le carburant tombe lors du remplissage dans le compartiment.

L'invention a également pour objet un procédé de fabrication d'un réservoir à carburant, ce procédé comprenant les étapes suivantes :
a) réaliser au moins deux parties de réservoir en matière plastique par moulage,
b) fixer une pompe à carburant sur la surface intérieure de l'une des parties de réservoir, et
c) assembler les parties de réservoir.

Ce procédé de fabrication permet d'avoir une grande liberté dans le positionnement des éléments fixés à l'intérieur du réservoir, puisque leur montage s'effectue avant l'assemblage des parties de réservoir.

De préférence, on réalise les parties de réservoir par moulage par injection de matière thermoplastique.

Avantageusement, entre l'étape a) et l'étape b) du procédé défini plus haut, on traite les parties de réservoir de manière à leur conférer une résistance aux hydrocarbures.

Ce traitement s'effectue sur des parties de réservoir non assemblées, ce qui en facilite le déroulement.

On peut fixer sur la surface intérieure de la partie inférieure de réservoir :
- la pompe à carburant,
- un régulateur de pression,
- une jauge à carburant.

On peut également fixer un canister dans un logement débouchant à l'extérieur de la partie supérieure de réservoir.

On peut fixer sur la surface intérieure de la partie inférieure de réservoir :
- un clapet,
- une tubulure de remplissage,
- un conduit de dégazage.

On peut également fixer un filtre à carburant dans un logement débouchant à l'extérieur de la partie inférieure de réservoir.

Dans le but de mieux faire comprendre l'invention, on va en décrire maintenant un mode de réalisation, donné à titre d'exemple non limitatif, en référence au dessin annexé, sur lequel :
- la figure 1 est une vue en perspective, schématique, d'un réservoir conforme à un exemple de mise en oeuvre de l'invention,
- la figure 2 est une vue schématique de l'intérieur de la partie inférieure du réservoir de la figure 1,
- la figure 3 est une vue schématique de la moitié du réservoir de la figure 1, observée dans un plan de coupe vertical,
- la figure 4 est une vue schématique de dessous de la partie supérieure du réservoir de la figure 1, et
- la figure 5 représente de manière schématique un détail de la figure 4.

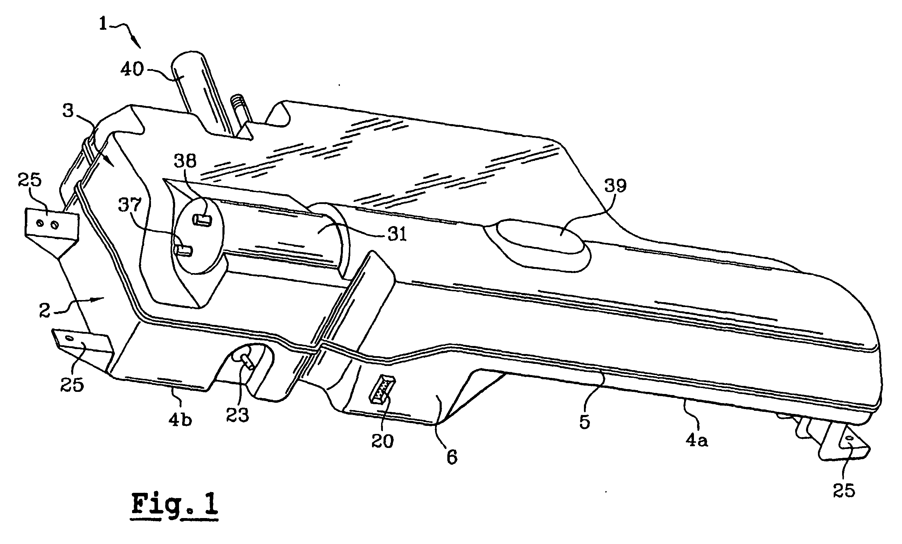

On a représenté sur la figure 1 un réservoir 1 à carburant pour véhicule automobile, comprenant une partie inférieure 2 et une partie supérieure 3 assemblées par soudage le long d'une ligne d'assemblage 5.

Les deux parties 2 et 3 sont réalisées en matière thermoplastique par moulage par injection.

La surface intérieure de chacune de ces parties 2 et 3 a reçu un traitement permettant de former une barrière vis-à-vis des hydrocarbures, par exemple un traitement de fluoration.

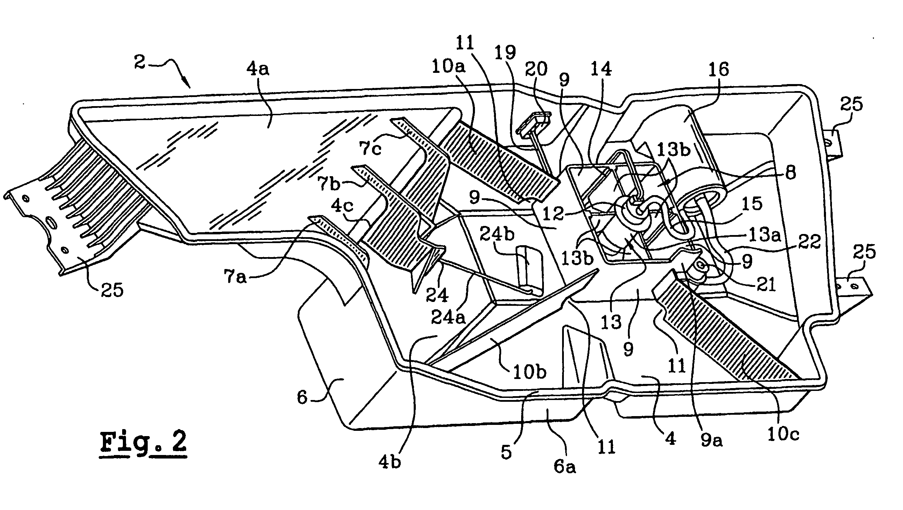

Comme on peut le voir sur les figures 1 et 2, la partie inférieure 2 comporte une paroi de fond 4 étagée, ayant une partie haute 4a et une partie basse 4b.

Les parties basse 4b et haute 4a sont reliées par un montant 4c sensiblement vertical, sur lequel forment saillie des nervures de rigidification 7a, 7b et 7c verticales.

La partie inférieure 2 comporte sensiblement au centre de la partie basse 4b un compartiment 8 de forme générale parallélépipédique, formé par quatre cloisons verticales 9 réalisées d'un seul tenant avec la paroi de fond 4.

Des nervures 10a, 10b et 10c verticales, réalisées d'un seul tenant avec la paroi de fond 4, forment saillie sur la partie basse 4b.

La nervure 10a s'étend entre le montant 4c et une arête du compartiment 8.

Les nervures 10b et 10c s'étendent entre un côté 6a de la paroi latérale 6 de la partie inférieure 2 et une cloison 9.

Les nervures 10a, 10b et 10c sont traversées, au niveau de leur raccordement au compartiment 8 et à leur base, d'ouvertures 11 qui permettent une circulation du carburant autour du compartiment 8.

L'emplacement du compartiment 8 correspond sensiblement au point bas du réservoir.

On a disposé à l'intérieur du compartiment 8 une pompe à carburant 12.

Cette pompe à carburant 12 est fixée dans le compartiment 8 grâce à un organe de fixation 13 qui comporte une partie centrale 13a de forme tubulaire, qui reçoit la pompe à carburant 12, et quatre ailettes 13b radiales comportant des nervures à leurs extrémités, ces nervures étant agencées pour s'insérer verticalement dans des glissières 14 réalisées sur les faces intérieures des cloisons 9.

L'organe de fixation 13 est réalisé dans un matériau présentant de bonnes propriétés d'absorption des vibrations mécaniques, ce qui permet de réduire le bruit de fonctionnement de la pompe en rendant plus difficile la transmission des vibrations de fonctionnement de la pompe 12 à la paroi de fond 4.

La pompe à carburant 12 comporte une entrée d'aspiration prélevant le carburant par l'intermédiaire d'une crépine dans le fond du compartiment 8.

La pompe à carburant 12 est reliée à l'alimentation électrique du véhicule au moyen d'un câble électrique 19 et d'un connecteur électrique 20 fixé de manière étanche dans une ouverture de la paroi latérale 6 du réservoir.

La sortie de la pompe à carburant 12 est reliée par une tubulure 15 à un filtre à carburant fixé depuis l'extérieur du réservoir dans un logement 16 réalisé d'un seul tenant par moulage de matière plastique avec la paroi latérale 6 de la partie inférieure 2.

Le réservoir 1 comporte également un régulateur de pression 21 fixé sur la partie basse 4b, à proximité du compartiment 8.

Ce régulateur de pression 21 est relié au filtre à carburant contenu dans le logement 16 par une tubulure 22.

Le filtre à carburant précité comporte un embout 23 que l'on peut voir sur la figure 1, destiné à être relié par un conduit (non représenté) au moteur du véhicule.

Le carburant qui n'est pas consommé par le moteur et qui a été aspiré par la pompe 12 et envoyé au filtre à carburant est renvoyé dans le réservoir par la tubulure 22 et sort par le régulateur de pression 21, à proximité du compartiment 8, de sorte que lorsqu'il ne reste plus qu'une faible quantité de carburant dans le réservoir, le carburant qui est refoulé par le régulateur de pression 21 peut être rapidement réaspiré par la pompe 12.

Le réservoir 1 comporte encore une jauge à carburant 24 fixée sur la nervure 7b, cette jauge étant reliée au connecteur électrique 20 et comportant un bras articulé 24a muni à son extrémité d'un flotteur 24b.

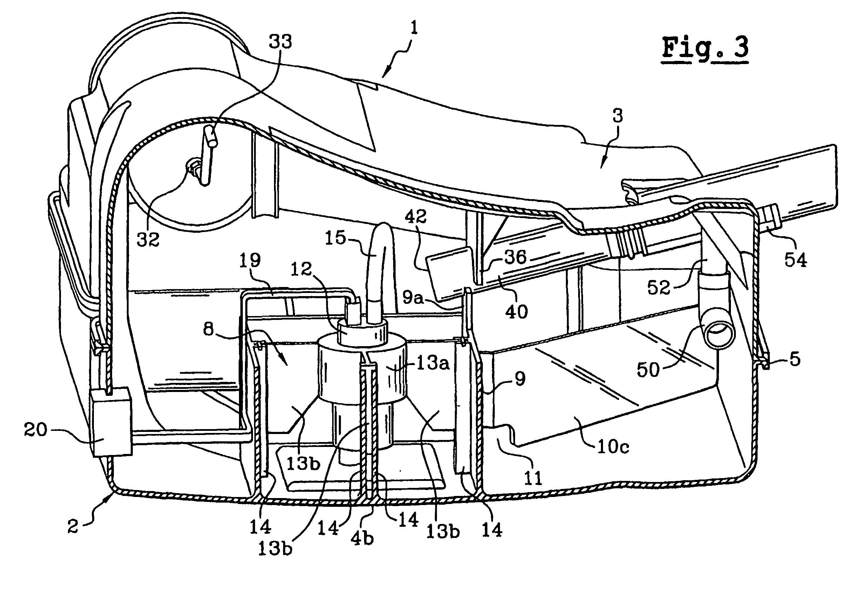

L'une des cloisons 9 définissant le compartiment 8 présente un prolongement vertical 9a dont le bord supérieur est concave vers le haut, pour servir de support à l'extrémité d'une tubulure de remplissage 40, comme cela sera précisé dans la suite en se référant à la figure 3.

La partie inférieure 2 comporte des pattes extérieures 25 permettant de fixer le réservoir 1 sur le véhicule.

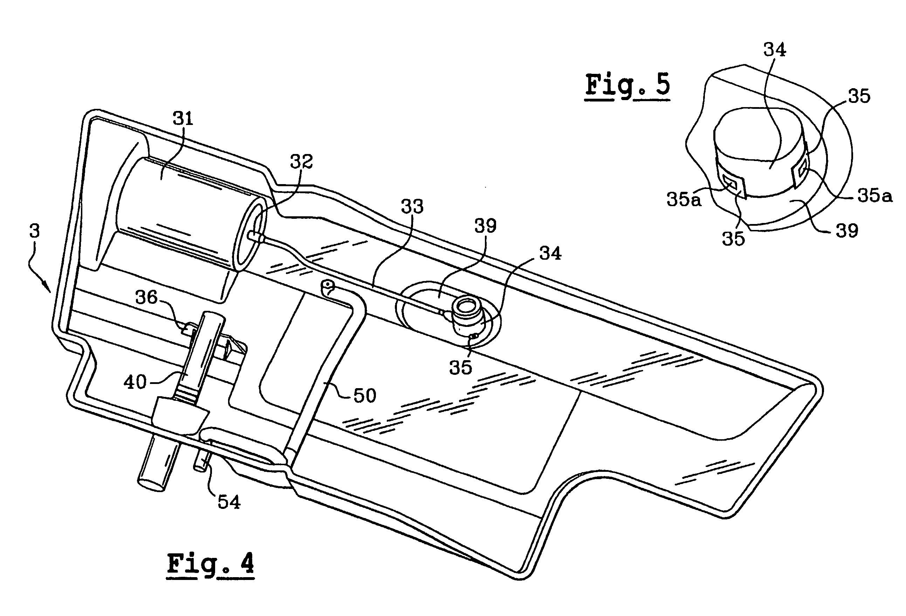

On a représenté sur la figure 4 la partie supérieure 3.

La partie supérieure 3 est conformée pour recevoir la tubulure de remplissage 40 précitée.

Cette tubulure de remplissage 40 traverse la paroi latérale de la partie supérieure 3.

Un logement 31 est réalisé d'un seul tenant par moulage avec la partie supérieure 3 pour recevoir un canister.

Le logement 31 est ouvert vers l'extérieur du réservoir pour permettre la mise en place du canister depuis l'extérieur, et éventuellement son remplacement.

Le logement 31 communique avec l'intérieur du réservoir par un embout 32 réalisé d'un seul tenant avec la partie supérieure 3 lors du moulage de cette dernière.

Cet embout 32 est relié par une tubulure 33 à un clapet 34 fixé par encliquetage dans un renfoncement 39 situé sensiblement au point haut du réservoir.

Des pattes 35 présentant des évidements 35a dans lesquels des dents du clapet 34 peuvent s'engager sont disposées dans le renfoncement 39, comme on peut le voir sur la figure 5.

Le canister placé dans le logement 31 communique avec l'extérieur par deux embouts 37 et 38 que l'on peut voir sur la figure 1, dont l'un communique avec l'air ambiant et l'autre avec un système de purge permettant de réactiver les charbons actifs contenus dans le canister.

L'extrémité inférieure 42 de la tubulure de remplissage 40 est positionnée, lorsque les parties inférieure 2 et supérieure 3 du réservoir sont assemblées, de manière à ce que le carburant tombe dans le compartiment 8.

Cette configuration permet d'assurer le remplissage en premier du compartiment 8, ce qui est avantageux lorsque l'on ne dispose que d'une faible quantité de carburant pour remplir le réservoir.

Le remplissage du compartiment 8 avec une quantité de carburant inférieure à quelques litres est suffisant pour permettre l'amorçage de la pompe à carburant 12.

La partie supérieure 3 comporte une nervure 36 dont le bord inférieur est concave vers le bas, cette nervure 36 étant agencée de manière à se positionner avec un léger décalage au-dessus du prolongement 9a précité, afin de maintenir la tubulure 40 contre ce prolongement 9a lorsque le réservoir 1 est assemblé.

Un conduit de dégazage 50 servant au déclenchement du pistolet de remplissage est fixé sur la partie supérieure 3, débouchant à une extrémité 1 à proximité du point haut du réservoir et se raccordant à l'autre extrémité à un embout 52, comme on peut le voir sur les figures 3 et 4.

L'embout 52 est réalisé d'un seul tenant avec la partie supérieure 3, lors du moulage de cette dernière, et communique avec un embout extérieur 54.

Par ailleurs, le clapet 34 est dans l'exemple décrit agencé pour réaliser les fonctions suivantes :
- fermer l'accès à la tubulure 33 en cas de retournement du véhicule,
- créer une perte de charge importante au-delà d'un niveau de carburant prédéterminé dans le réservoir pour empêcher le sur-remplissage,
- empêcher les projections de carburant liquide d'atteindre le canister.

Bien entendu, l'exemple qui vient d'être décrit ne présente aucun caractère limitatif et l'on pourra apporter toutes modifications désirables, sans pour cela sortir du cadre de l'invention.

On peut ainsi modifier l'emplacement des différents éléments rapportés sur les parties inférieure et supérieure du réservoir.

On peut également modifier la forme de ces dernières.

## Revendications

1. Réservoir à carburant (1) comportant une enveloppe formée par l'assemblage d'au moins deux parties de réservoir (2, 3) réalisées par moulage de matière plastique et définissant, lorsque assemblées, la surface intérieure du réservoir (1), et comportant un compartiment (8) placé dans un point bas du réservoir (1) à l'intérieur duquel se trouve une pompe à carburant (12), fixée sur la surface intérieuredu réservoir avant l'assemblage des parties de réservoir, l'une des parties de réservoir comportant une tubulure de remplissage (40), ledit réservoir étant **caractérisé par le fait :**
- **que** l'extrémité (42) de la tubulure de remplissage (40) par laquelle sort le carburant est positionnée de manière à ce que le carburant tombe lors du remplissage dans le compartiment (8);
- **que** la pompe (12) est supportée par des moyens de support (13) permettant d'éviter la transmission des vibrations de la pompe au réservoir; et
- **que** les moyens de support comportent une partie centrale (13a) agencée pour recevoir la pompe et des ailettes (13b) permettant d'assurer le maintien de cette partie centrale, agencées pour se fixer à la paroi définissant ledit compartiment.

2. Réservoir selon la revendication précédente, **caractérisé par le fait que** l'enveloppe du réservoir est dépourvue d'orifice traversant destiné à l'introduction à l'intérieur du réservoir d'un élément rapporté.

3. Réservoir selon la revendication 1, la pompe comportant un corps, **caractérisé par le fait que** l'enveloppe du réservoir est dépourvue d'orifice traversant de section supérieure aux dimensions du corps de la pompe à carburant.

4. Réservoir selon la revendication 1, **caractérisé par le fait que** l'enveloppe du réservoir est dépourvue d'orifice traversant situé au droit de la pompe à carburant.

5. Réservoir selon l'une quelconque des revendications précédentes, **caractérisé par le fait qu'**il comporte au moins un élément rapporté tel qu'une jauge, fixé sur la surface intérieure du réservoir et séparé de ladite pompe à carburant.

6. Réservoir selon l'une quelconque des revendications précédentes **caractérisé par le fait que** le compartiment (8) est réalisé d'un seul tenant par moulage de matière avec ladite partie de réservoir.

7. Réservoir selon l'une quelconque des revendications précédentes,
**caractérisé par le fait que** les deux.parties de réservoir (2, 3) sont réalisées par moulage par injection de matière thermoplastique.

8. Réservoir selon l'une des deux revendications précédentes, **caractérisé par le fait qu'**au moins l'une des parties de réservoir (2, 3) comporte des moyens de fixation (7b ; 9 ; 9a ; 35) destinés à permettre le montage d'un élément rapporté (13 ; 24 ; 34) à l'intérieur du réservoir, ces moyens de fixation étant réalisés d'un seul tenant par moulage de matière avec ladite partie de réservoir.

9. Réservoir selon la revendication immédiatement précédente, **caractérisé par le fait que** les moyens de fixation comportent au moins une paroi (9 ; 35) formant saillie à l'intérieur du réservoir (1).

10. Réservoir selon la revendication immédiatement précédente, **caractérisé par le fait que** la paroi (35) comporte au moins un évidement (35a) permettant de recevoir un organe de fixation de l'élément rapporté (34).

11. Réservoir selon la revendication 9, **caractérisé par le fait que** ladite paroi comporte au moins une dent destinée à s'encliqueter dans un évidement de l'élément rapporté.

12. Réservoir selon l'une quelconque des revendications précédentes, **caractérisé par le fait qu'**au moins l'une des parties de réservoir comporte un logement (31) permettant la fixation sur le réservoir d'un élément par extérieur du réservoir, ce logement étant défini par une paroi venue de moulage avec la partie de réservoir concerné.

13. Réservoir selon la revendications immédiatement précédente, **caractérisé par le fait que** ledit élément est un filtre à carburant.

14. Réservoir selon la revendication 12, **caractérisé par le fait que** ledit élément est un canister.

15. Réservoir selon l'une quelconque des revendications précédentes, **caractérisé par le fait que** l'une des parties de réservoir (2, 3) forme sensiblement la moitié inférieure et l'autre partie forme sensiblement la moitié supérieure.

16. Réservoir selon l'une quelconque des revendications précédentes, **caractérisé par le fait que** la partie inférieure (2) du réservoir comporte un logement (16) défini par une paroi réalisée d'un seul tenant par moulage de matière avec cette partie, pour recevoir un filtre à carburant.

17. Réservoir selon l'une quelconque des revendications précédentes,
**caractérisé par le fait que** la partie supérieure (3) du réservoir comporte un logement (31) défini par une paroi réalisée d'un seul tenant par moulage de matière avec cette partie, pour recevoir un canister.

18. Réservoir selon l'une quelconque des revendications précédentes, **caractérisé par le fait que** la surface intérieure du réservoir comporte des nervures (10a, 10b, 10c) sensiblement verticales.

19. Réservoir selon la revendication immédiatement précédente, **caractérisé par le fait qu'**au moins une nervure (10a, 10b, 10c) est traversée à sa base par un passage (11) permettant la circulation du carburant.

20. Réservoir selon la revendication immédiatement précédente, **caractérisé par le fait qu'**il comporte une jauge à carburant (24) fixée sur la surface intérieure du réservoir (1).

21. Réservoir selon l'une quelconque des revendications précédentes, **caractérisé par le fait qu'**il comporte un régulateur de pression (21) fixé sur la surface intérieure du réservoir (1) à proximité de son point bas.

22. Réservoir selon l'une quelconque des revendications précédentes, **caractérisé par le fait que** les parties de réservoir (2, 3) sont assemblées par collage ou soudage.

## Patentansprüche

1. Kraftstoffbehälter (1) mit einem Gehäuse, das durch Zusammenbau von zumindest zwei Behälterteilen (2, 3) gebildet ist, wovon einer ein Füllrohr (40) aufweist und die durch Formung von Kunststoffmaterial hergestellt sind und nach dem Zusammenbau Innenflächen des Behälters (1) bilden; und mit ein Abteil (8), das an einem niedrigen Punkt des Behälters (1) angeordnet ist und das eine Kraftstoffpumpe (12) aufweist, die vor dem Zusammenbau der Behälterteile an seiner Innenseite befestigt wird, und **dadurch gekennzeichnet ist,**
- **daß** das Ende (42) des Füllrohr (40), über welches der Kraftstoff austritt, derart angeordnet ist, daß der Kraftstoff beim Befüllen in das Abteil (8) fällt;
- **daß** die Pumpe (12) von Tragmitteln (13) abgestützt ist, die es ermöglichen, eine Übertragung der Vibration von der Pumpe auf den Behälter zu vermeiden;
- **daß** die Tragmittel einen zentralen Teil (13a) haben, der so ausgebildet ist, daß er die Pumpe und Rippen (13b) aufnimmt, die es ermöglichen, den zentralen Teil zu halten, und die so ausgebildet sind, daß sie ihn an der das Abteil bildenden Wand befestigen.

2. Kraftstoffbehälter nach dem vorhergehenden Anspruch, **dadurch gekennzeichnet, daß** das Behältergehäuse frei von einer Durchtrittsöffnung ist, über welche ein Zusatzelement in den Behälter einführbar ist.

3. Kraftstoffbehälter nach Anspruch 1, bei welchem die Pumpe einen Körper hat, **dadurch gekennzeichnet, daß** das Behältergehäuse frei von einer den oberen Teil durchsetzenden Durchtrittsöffnung mit Dimensionen des Körpers der Kraftstoffpumpe ist.

4. Kraftstoffbehälter nach Anspruch 1, **dadurch gekennzeichnet, daß** das Behältergehäuse frei von einer Durchtrittsöffnung ist, welche das Gehäuse an der Stelle der Kraftstoffpumpe durchsetzt.

5. Kraftstoffbehälter nach einem der vorhergehenden Ansprüche, **dadurch gekennzeichnet, daß** er zumindest ein Zusatzelement aufweist, wie eine Meßeinrichtung, die an der Innenseite des Behälters befestigt und von der Kraftstoffpumpe getrennt ist.

6. Kraftstoffbehälter nach einem der vorhergehenden Ansprüche, **dadurch gekennzeichnet, daß** das Abteil (8) durch Materialformung mit dem Behälter einstückig ausgebildet ist.

7. Kraftstoffbehälter nach einem der vorhergehenden Ansprüche, **dadurch gekennzeichnet, daß** die beiden Teile des Behälters durch Spritzgießformung aus thermoplastischem Material hergestellt sind.

8. Kraftstoffbehälter nach einem der beiden vorhergehenden Ansprüche, **dadurch gekennzeichnet, daß** zumindest einer der Teile des Behälters (2, 3) Fixiermittel (7b; 9; 9a; 35) aufweist, die eine Montage eines Zusatzelementes (13; 24; 34) im Inneren des Behälters gestatten, wobei die Fixiermittel durch Materialformung mit dem Behälter einstückig mit diesem ausgebildet sind.

9. Kraftstoffbehälter nach dem unmittelbar vorhergehenden Anspruch, **dadurch gekennzeichnet, daß** die Fixiermittel zumindest eine Wand (9; 35) aufweisen, die in das Innere des Behälters (1) vorspringt.

10. Kraftstoffbehälter nach dem unmittelbar vorhergehenden Anspruch, **dadurch gekennzeichnet, daß** die Wand (35) zumindest eine Ausnehmung (35a) aufweist, die ein Fixierorgan des Zusatzelementes (34) aufnimmt.

11. Kraftstoffbehälter nach Anspruch 9, **dadurch gekennzeichnet, daß** die Wand zumindest einen Vorsprung hat, der dazu bestimmt ist, in eine Ausnehmung des Elementes einzurasten.

12. Kraftstoffbehälter nach einem der vorhergehenden Ansprüche, **dadurch gekennzeichnet, daß** zumindest einer der Teile des Behälters einen Sitz (31) zum Fixieren eines Elementes an den Behälter an dessen Außenseite aufweist, wobei dieser Sitz durch eine Wand gebildet ist, die durch Formung mit dem betreffenden Teil des Behälters ausgebildet wird.

13. Kraftstoffbehälter nach dem unmittelbar vorhergehenden Anspruch, **dadurch gekennzeichnet, daß** das Element ein Kraftstoffilter ist.

14. Kraftstoffbehälter nach Anspruch 12, **dadurch gekennzeichnet, daß** das Element ein Kanister ist.

15. Kraftstoffbehälter nach einem der vorhergehenden Ansprüche, **dadurch gekennzeichnet, daß** einer der Teile des Behälters (2, 3) im wesentlichen die untere Hälfte und der andere Teil im wesentlichen die obere Hälfte bildet.

16. Kraftstoffbehälter nach einem der vorhergehenden Ansprüche, **dadurch gekennzeichnet, daß** der untere Teil (2) des Behälters einen Sitz (16) aufweist, der durch eine Wand gebildet ist, die durch Formung aus dem Material dieses Teiles einstückig mit diesem ausgebildet ist, um einen Kraftstoffilter aufzunehmen.

17. Kraftstoffbehälter nach einem der vorhergehenden Ansprüche, **dadurch gekennzeichnet, daß** der obere Teil (3) des Behälters einen Sitz (31) aufweist, der durch eine Wand gebildet ist, die durch Formung aus dem Material dieses Teiles mit diesem einstückig ausgebildet ist, um einen Kanister aufzunehmen.

18. Kraftstoffbehälter nach einem der vorhergehenden Ansprüche, **dadurch gekennzeichnet, daß** die Innenfläche des Behälters Rippen (10a, 10b, 10c) aufweist, die im wesentlichen vertikal verlaufen.

19. Kraftstoffbehälter nach dem unmittelbar vorhergehenden Anspruch, **dadurch gekennzeichnet, daß** zumindest eine Rippe (10a, 10b, 10c) an ihrer Basis von einem Durchgang (11) durchsetzt ist, der eine Zirkulation des Kraftstoffes ermöglicht.

20. Kraftstoffbehälter nach dem unmittelbar vorhergehenden Anspruch, **dadurch gekennzeichnet, daß** er einen Kraftstoffmesser (24) aufweist, der an der Innenfläche des Behälters (1) befestigt ist.

21. Kraftstoffbehälter nach einem der vorhergehenden Ansprüche, **dadurch gekennzeichnet, daß** er einen Druckregler (21) aufweist, der an der Innenfläche des Behälters (1) in der Nähe seines unteren Punktes befestigt ist.

22. Kraftstoffbehälter nach einem der vorhergehenden Ansprüche, **dadurch gekennzeichnet, daß** die Teile des Behälters (2, 3) durch Kleben oder Schweißen miteinander verbunden sind.

## Claims

1. Fuel tank (1) comprising a casing formed by assembling at least two tank parts (2, 3) produced by moulding plastic and defining, when assembled, the interior surface of the tank (1), this tank comprising a compartment (8) placed in a low point of the tank (1) and in which a fuel pump (12) is located, fixed to the interior surface of the reservoir before the tank parts are assembled, one of the tank parts comprising a filling pipe (40), said fuel tank being **characterized in that**:
- the end (42) of the filling pipe (40) via which the fuel emerges is positioned in such a way that the fuel drops into the compartment (8) during filling;
- the pump (12) is supported by support means (13) allowing transmission of vibration from the pump to the tank to be avoided;
- the support means comprise a central part (13a) designed to accept the pump and fins (13b) for holding this central part, the fins being designed to be fixed to the wall defining the said compartment.

2. Tank according to the preceding claim, **characterized in that** the casing of the tank has no through-orifices intended for introducing attached elements into the tank.

3. Tank according to Claim 1, the pump comprising a pump housing, **characterized in that** the casing of the tank has no through-orifice of a cross-section greater than the dimensions of the pump housing of the fuel pump.

4. Tank according to Claim 1, **characterized in that** the casing of the tank has no through orifice situated in line with the fuel pump.

5. Tank according to any one of the preceding claims, **characterized in that** it comprises at least one attached element such as a gauge, fixed to the interior surface of the tank and separated from the said fuel pump.

6. Tank according to any one of the preceding claims, **characterized in that** the compartment (8) is made as a single piece by moulding as an integral part of the said tank part.

7. Tank according to any one of the preceding claims, **characterized in that** the two tank parts (2, 3) are produced by moulding by injecting a thermoplastic.

8. Tank according to one of the two preceding claims, **characterized in that** at least one of the tank parts (2, 3) comprises fixing means (7b; 9; 9a; 35) designed to allow the mounting of an attached element (13; 24; 34) inside the tank, these fixing means being produced as a single piece by moulding as an integral part of the said tank part.

9. Tank according to the immediately preceding claim, **characterized in that** the fixing means comprise at least one wall (9; 35) projecting into the tank (1).

10. Tank according to the immediately preceding claim, **characterized in that** the wall (35) comprises at least one recess (35a) for housing a fixing member belonging to the attached element (34).

11. Tank according to Claim 9, **characterized in that** the said wall comprises at least one tooth intended to clip into a recess in the attached element.

12. Tank according to any one of the preceding claims, **characterized in that** at least one of the tank parts comprises a housing (31) allowing an element to be fixed to the tank from outside the tank, this housing being defined by a wall moulded as an integral part of the tank part concerned.

13. Tank according to the immediately preceding claim, **characterized in that** the said element is a fuel filter.

14. Tank according to Claim 12, **characterized in that** the said element is a canister.

15. Tank according to any one of the preceding claims, **characterized in that** one of the tank parts (2, 3) more or less forms the lower half and the other part more or less forms the upper half.

16. Tank according to any one of the preceding claims, **characterized in that** the lower half (2) of the tank comprises a housing (16) defined by a wall produced as a single piece by moulding as an integral part of this part, to accept a fuel filter.

17. Tank according to any one of the preceding claims, **characterized in that** the upper part (3) of the tank comprises a housing (31) defined by a wall produced as a single piece by moulding as an integral part of this part, to accept a canister.

18. Tank according to any one of the preceding claims, **characterized in that** the interior surface of the tank comprises more or less vertical ribs (10a, 10b, 10c).

19. Tank according to the immediately preceding claim, **characterized in that** at least one rib (10a, 10b, 10c) has, passing through it at its base, a passage (11) allowing the flow of fuel.

20. Tank according to the immediately preceding claim, **characterized in that** it comprises a fuel gauge (24) fixed onto the interior surface of the tank (1).

21. Tank according to any one of the preceding claims, **characterized in that** it comprises a pressure regulator (21) fixed onto the interior surface of the tank (1) near its low point.

22. Tank according to any one of the preceding claims, **characterized in that** the tank parts (2, 3) are assembled by bonding or welding.
